# EUROPÄISCHE PATENTSCHRIFT

(11) **EP 2 698 579 B1**
(45) Veröffentlichungstag und Bekanntmachung des Hinweises auf die Patenterteilung: **20.05.2015**
(21) Anmeldenummer: 13155066.7
(22) Anmeldetag: 13.02.2013
(51) Int. Cl.: F21V 23/04, H05B 37/02, G05D 25/02

(54) **Verfahren zum präsenzabhängigen Steuern der Nachlaufzeit eines oder mehrerer elektrischer Aktoren**
Method for the presence-dependent control of the shut-off delay of one or more electric actuators
Procédé de commande en fonction de la présence de la durée de marche à vide d'un ou plusieurs actionneurs électriques

(30) Priorität: 09.05.2012 DE 102012104078
(43) Veröffentlichungstag der Anmeldung: 19.02.2014
(73) Patentinhaber: Insta Elektro GmbH, 58509 Lüdenscheid (DE)
(72) Erfinder: Schubert, Jörg, 58091 Hagen (DE); Hilleke, Dieter, 57413 Finnentrop (DE)

(56) Entgegenhaltungen:
- EP-A1- 1 311 142
- WO-A1-85/05753
- US-A- 5 386 210
- US-A- 5 656 995
- US-A1- 2010 102 760
- US-A1- 2011 022 189
- US-B1- 6 759 954
- US-B1- 7 155 317

## Beschreibung

Die Erfindung betrifft ein Verfahren zum präsenzabhängigen Steuern der Nachlaufzeit eines oder mehrerer elektrischer Aktoren, etwa des oder der Aktoren einer Beleuchtungsinstallation in einem Raum, bei welchem Verfahren
- mit dem Einschalten des oder der Aktoren ein Timer für die Nachlaufzeit gestartet wird, wobei die initiale Nachlaufzeit kürzer als eine systemseitig vorgegebene oder einstellbare maximale Nachlaufzeit ist,
- durch jedes präsenzbedingtes Triggersignal innerhalb einer laufenden Nachlaufzeit ein Nachlaufzeittimerretrigger durchgeführt wird und
- der oder die Aktoren ausgeschaltet werden, wenn die aktuell laufende Nachlaufzeit abgelaufen ist und innerhalb dieser kein präsenzbedingtes Triggersignal empfangen worden ist.

Gebäudetechnische Installationen werden mitunter präsenzabhängig gesteuert. Hierbei kann es sich um unterschiedliche Installationen handeln, beispielsweise eine Beleuchtungsinstallation, eine Heizungs-/Lüftungsinstallation oder dergleichen, nur um einige von einer Mehrzahl möglicher Beispiele zu nennen. Besonders häufig werden Beleuchtungsinstallationen präsenzabhängig gesteuert. Gemäß einer solchen Steuerung wird in Abhängigkeit von der Detektion einer Bewegung innerhalb eines von einem Bewegungs- und/oder Präsenzmelder überwachten Bereiches die Beleuchtung eingeschaltet. Mit dem Einschalten der einen oder mehreren Leuchten bzw. der diese ansteuernden Aktoren wird zeitgleich ein Timer für eine Nachlaufzeit gestartet. Die Nachlaufzeit bestimmt diejenige Zeit, wann die eine oder die mehreren Leuchten wieder ausgeschaltet werden. Vorbekannt sind Installationen, bei denen eine Nachlaufzeit bei der Inbetriebnahme fest eingestellt wird. Typische Zeiten für eine Nachlaufzeit liegen zwischen 5 und 15 Minuten. Eingestellt wird die Nachlaufzeit in Abhängigkeit davon, ob in dem Überwachungsbereich eher mit einer kurzfristigen Präsenz oder mit einer längerfristigen Präsenz gerechnet wird. So wird man bei einer auf diese Weise angesteuerten Beleuchtungsinstallation in einem Gang oder in einem Flur eher eine kürzere Nachlaufzeit einstellen als bei der Anwendung eines solchen Verfahrens zum Steuern der Beleuchtung in einem Büroraum, in dem typischerweise mit einer längeren Präsenz zu rechnen ist. Wird innerhalb einer aktuell laufenden Nachlaufzeit erneut eine Präsenz detektiert, wird durch ein solches präsenzbedingtes Triggersignal die Nachlaufzeit neu gestartet; mithin es findet ein Nachlaufzeittimerretrigger statt. Schließlich sollen der oder die Aktoren, im vorliegenden Beispiel eine Beleuchtungsinstallation nicht ausgeschaltet werden, wenn sich tatsächlich noch ein oder mehrere Personen in dem Überwachungsbereich befinden. Erst wenn eine Nachlaufzeit abgelaufen ist, ohne dass ein präsenzbedingtes Triggersignal innerhalb der laufenden Nachlaufzeit erfasst worden ist, werden der oder die Aktoren ausgeschaltet.

Unerwünscht sind bei einem solchen Verfahren Fehlabschaltungen. Eine Fehlabschaltung ist eine gemäß dem vorbeschriebenen Algorithmus zwar bestimmungsgemäß durchgeführte Abschaltung. Zu einer Fehlabschaltung wird eine solche Abschaltung jedoch erst dann, wenn unmittelbar nach dem Abschaltvorgang erneut ein präsenzbedingtes Triggersignal erfasst wird. Dieses schaltet zwar den oder die Aktoren, also beispielsweise die Beleuchtungsinstallation wieder ein, allerdings wird das kurzzeitige Ausschalten als unangenehm empfunden. Um diesem Problem entgegen zu wirken, müsste die Nachlaufzeit länger eingestellt werden. Das Einstellen einer verlängerten Nachlaufzeit läuft jedoch dem ebenfalls an derartige Installationen gestellten Anforderungen, möglichst energieeffizient zu arbeiten, entgegen.

Aus EP 2 364 069 A1 ist ein Verfahren zur Steuerung eines Präsenzmelders bekannt, mit dem in Bezug auf die angesprochene Problematik versucht wird, Abhilfe zu schaffen. Bei diesem Stand der Technik stehen zwei Ablaufzeiten zur Verfügung - eine kürze und eine längere. Um nach Einschalten der Installation, beispielsweise der Beleuchtungsinstallation zu entscheiden, ob ein Abschalten der Installation nach Ablauf der kürzeren oder der längeren Nachlaufzeit vorgenommen werden soll, wird in einem ersten zeitlichen Testintervall abgeschätzt, ob eine detektierte Präsenz eher als Kurzzeit-Präsenz oder eher als Langzeit-Präsenz zu werten ist. Dieses erfolgt durch eine Auswertung der innerhalb des Testintervalls erfassten Bewegungen mit systemseitig hinterlegten Bewegungsmustern. Die Vergleichsmuster sind in Bezug auf Kurzzeit-Präsenzbewegungsmuster und Langzeit-Präsenzbewegungsmuster unterschieden. Dabei wird a priori von einer Kurzzeit-Präsenz ausgegangen, wobei die Länge des Testintervalls der Nachlaufzeit bis zum gewünschten Abschalten bei einer Kurzzeit-Präsenz entspricht. Wird hingegen während des laufenden Testintervalls durch den vorbeschriebenen Vergleich festgestellt, dass es sich voraussichtlich um eine Langzeit-Präsenz handeln wird, wird die längere Nachlaufzeit verwendet und demzufolge der oder die Aktoren erst dann ausgeschaltet, wenn die längere Nachlaufzeit abgelaufen ist.

Die EP 1 311 142 A1 zeigt ein System zum Steuern mehrerer Aktoren mittels einer Steuereinrichtung. Die Steuereinrichtung ist mit einem Anwesenheitssensor verbunden, der beim Feststellen einer Bewegung eines Objekts ein Aktivierungssignal an die Steuereinrichtung übermittelt. Die Aktoren werden für eine bestimmte Nachlaufzeit aktiviert, wobei vorgesehen ist, dass die Dauer der Nachlaufzeit in Abhängigkeit von der Häufigkeit der Aktivierungssignale verändert wird. Hierbei wird im Detail beschrieben, wie die Dauer bei größerer Häufigkeit verringert und bei geringerer Häufigkeit verlängert wird.

Die US 2010/0102760 A1 offenbart ein Beleuchtungskontrollsystem, wobei ein Prozessor über eine Schalteinrichtung eine Reihe von Lampen ansteuert, indem er bei Eingehen eines Signals eines Bewegungsmelders die Lampen für eine gewisse Nachlaufzeit einschaltet. Wird innerhalb der Nachlaufzeit kein neues Signal registriert, werden die Lampen abgeschaltet. Falls innerhalb eines gewissen Zeitintervalls hiernach ein neues Bewegungssignal eingeht, wird die Nachlaufzeit verlängert. Bei wiederholtem Ausbleiben eines Bewegungssignals innerhalb des Zeitintervalls wird die Nachlaufzeit verkürzt.

Die US 5,656,995 A offenbart ein Präsenzüberwachungssystem für eine Überwachungszone. Neben Präsenzsensoren sind auch Sensoren vorgesehen, mittels derer festgestellt werden kann, dass eine Person die Zone verlässt. Letztere könne z.B. gezielt einen Türbereich überwachen. Auf Basis der Präsenzfeststellung wird ein Einschaltsignal ausgelöst und für eine festgelegte Nachlaufzeit aufrechterhalten. Wird während der Nachlaufzeit erneut eine Präsenz festgestellt, beginnt die Nachlaufzeit von vorne zu laufen. Wird allerdings festgestellt dass eine Person die Zone verlässt, ohne dass kurz danach erneut eine Präsenz detektiert wird, wird ein Ausschaltsignal ausgelöst. Eine Zählung der Präsenzdetektionen oder eine Anpassung der Nachlaufzeit sind nicht offenbart.

Auch wenn mit diesen vorbekannten Verfahren gegenüber ansonsten verwendeten Verfahren zwei unterschiedliche Nachlaufzeiten in Abhängigkeit von der erwarteten Nachhaltigkeit einer Präsenz wahlweise eingesetzt werden können und hierdurch vor allem der Aspekt einer Energieeinsparung berücksichtigt ist, wäre es wünschenswert, ein Verfahren zur Verfügung zu haben, mit dem nicht nur der Aspekt der Energieeffizienz sondern auch der Aspekt des Komfort verbessert ist. Zudem soll eine Steuerung der Nachlaufzeit mit möglichst wenigen Ressourcen und vorzugsweise wenig rechenintensiv erfolgen. Der Erfindung liegt daher die Aufgabe zugrunde, ein solches Verfahren vorzuschlagen.

Gelöst wird diese Aufgabe erfindungsgemäß durch ein eingangs genanntes, gattungsgemäßes Verfahren, bei dem
- beginnend mit dem Einschalten des oder der Aktoren in aufeinanderfolgenden Zeitfenstern die in diesen festgestellten präsenzbedingten Triggersignale gezählt werden und
- wenn die Anzahl der Triggersignale eine vorgegebene Anzahl überschreitet, die aktuelle Nachlaufzeit beginnend mit dem nächsten oder einem der nächsten Nachlaufzeittimerretriggers verlängert wird, wobei eine Verlängerung der Nachlaufzeit nur bis zu der Maximallänge der Nachlaufzeit möglich ist.

Bei diesem Verfahren beginnt eine erste Einschaltperiode des oder der elektrischen Aktoren, also beispielsweise einer Beleuchtungsinstallation in einem Gebäude mit einer vorgegebenen Nachlaufzeit. Zeitgleich mit dem Beginn der Einschaltperiode wird in aufeinanderfolgenden Zeitfenstern die Nachhaltigkeit der Präsenz überprüft, und zwar durch Zählen der festgestellten präsenzbedingten Triggersignale. Wenn die präsenzbedingten Triggersignale eine vorgegebene Anzahl überschreiten, was gemäß eines bevorzugten Ausführungsbeispiels bereits dann der Fall ist, wenn die Anzahl der Triggersignale größer als null ist, wird die Nachlaufzeit beginnend mit dem oder einem der folgenden Nachlaufzeittimerretrigger verlängert. Typischerweise wird man das Verfahren derart ausführen, dass die Verlängerungen mit einem vordefinierten Zeitinkrement stattfinden. Vorgesehen sein kann, dass die auf diese Weise verlängerte Nachlaufzeit bereits der mit dem nächsten Nachlaufzeittimerretrigger beginnenden Nachlaufzeit zugrunde gelegt wird. Ebenfalls ist es möglich, die verlängerte Nachlaufzeit erst nach Ablauf des aktuellen Beobachtungszeitfensters mit dem dann beginnenden Nachlaufzeittimerretrigger zur Anwendung zu bringen.

Bei dem vorbeschriebenen Verfahren wird innerhalb einer laufenden Einschaltperiode der durch einen Nachlaufzeittimerretrigger getriggerte Nachlaufzeit diejenige zugrunde gelegt werden, die der vorangegangenen entsprochen hat, falls diese nicht durch Verlängerung mit ein oder mehreren Zeitinkrementen verlängert worden ist. Auf diese Weise wird infolge des Überwachens der Nachhaltigkeit einer Präsenz die Nachlaufzeit systemisch verlängert, was dem Komfort zugute kommt. Es versteht sich, dass eine Verlängerung der Nachlaufzeit nur bis zu einer vorgegebenen Maximalnachlaufzeitlänge erfolgt. Die maximale Nachlaufzeit ist entweder systemseitig voreingestellt oder wird bei der Inbetriebnahme der Installation eingestellt. Durch eine Beschränkung der maximal möglichen Verlängerung der Nachlaufzeit auf die maximale Nachlaufzeitlänge möchte man eine sukzessive Verlängerung der Nachlaufzeit über ein bestimmtes Maß hinaus entgegenwirken. Dieses stellt keinen Abstrich in Bezug auf den Komfort dar, da ab einer gewissen Nachlaufzeitlänge, beispielsweise 15 oder 20 Minuten alle Komfortfunktionen eingehalten werden. Dennoch wird durch diese Maßnahme verhindert, dass aus Energieeffizienzgründen die Nachlaufzeit ein solches Maximum nicht überschreitet. Ist eine Präsenz nicht oder nicht hinreichend nachhaltig, wird die Nachlaufzeit gar nicht oder nur einige Male verlängert. Daher ist bei einer Präsenz die Nachlaufzeit zunächst relativ kurz und wird in Abhängigkeit von der tatsächlich detektierten Nachhaltigkeit einer Präsenz mit zunehmender Nachhaltigkeit sukzessive verlängert. Bei diesem Verfahren passt sich somit die Nachlaufzeit an die tatsächlichen Komfortbedürfnisse an, ohne den Aspekt der Energieeffizienz, das heißt, die Nachlaufzeit möglichst kurz zu lassen, nicht aus dem Auge zu verlieren.

Gemäß einem bevorzugten Ausführungsbeispiel ist vorgesehen, dass die letzte Nachlaufzeit einer vorangegangenen Einschaltperiode gespeichert und als aktuelle Nachlaufzeit für die sich daran anschließende Einschaltperiode zugrunde gelegt wird. Hierbei macht man sich sodann die in Bezug auf die Nachhaltigkeit einer Präsenz gewonnen Erkenntnisse aus der vorherigen Einschaltperiode zunutze. Dabei wird angenommen, dass die neu gestartete Einschaltperiode eine ähnlich nachhaltige Präsenz aufweisen wird, wie die vorangegangene. Dieses dürfte vor allem dann der Fall sein, wenn die zwischen zwei Einschaltperioden liegende Ausschaltperiode nicht zu lang ist.

Eine Ausgestaltung, wie vorbeschrieben, kann in folgender Art und Weise alternativ oder kumulativ wie folgt erweitert werden:
Nach dem Ende einer ersten Einschaltperiode und somit mit dem Ausschalten des oder der Aktoren einer Installation wird bei Ausbleiben von präsenzbedingten Triggersignalen in sich an die vorangegangene Einschaltperiode anschließenden Zeitfenstern die jeweils zuvor gespeicherte, aktuelle Nachlaufzeit wieder verkürzt, wenn die gespeicherte Nachlaufzeit länger ist als die initiale Nachlaufzeit. Dabei kann die jeweilige Zeitspanne, mit der eine Nachlaufzeit verlängert bzw. verkürzt wird, äquidistant sein. Durchaus ist es auch möglich, das zur Verlängerung einer Nachlaufzeit verwendete Inkrement länger oder kürzer zu bemessen als ein zur Verkürzung einer Nachlaufzeit eingesetztes Dekrement. Bei dieser Verfahrensausgestaltung wird bei länger anhaltenden Ausschaltperioden sukzessive eine in der vorangegangenen Einschaltperiode aufgebaute verlängerte Nachlaufzeit schrittweise wieder abgebaut. Dieser Vorgang kann maximal zu einer Verkürzung der Nachlaufzeit führen, die der initalen Nachlaufzeit entspricht.

Gemäß einer weiteren Weiterbildung ist vorgesehen, dass die sich an einen Ausschaltvorgang anschließende, durch ein präsenzbedingtes Triggersignal ausgelöste Einschaltperiode mit einer gegenüber der ansonsten zugrunde zu legenden, zuvor gespeicherten Nachlaufzeit verlängerten Nachlaufzeit gestartet wird. Dies erfolgt dann, wenn innerhalb eines sich an den vorangegangenen Ausschaltvorgang anschließendes Kurzzeitfenster ein präsenzbedingtes Triggersignal empfangen wird. Es versteht sich, dass ein solches Kurzzeitfenster typischerweise kürzer ist als ein Zeitfenster, mit dem die Anzahl der präsenzbedingten Triggersignale gezählt werden, um anhand der gezählten Anzahl zu entscheiden, ob die Nachlaufzeit verlängert werden soll oder nicht. Bei dieser Verfahrensausgestaltung wird unterstellt, dass es sich bei Empfang eines präsenzbedingten Triggersignals innerhalb des Kurzzeitfensters zuvor um eine sogenannte Fehlabschaltung gehandelt hat, mithin die letzte Nachlaufzeit in der vorangegangenen Einschaltperiode letztendlich zu kurz bemessen war. Um eine Fehlabschaltung mit dieser erneuten Einschaltperiode entgegenzuwirken, wird diese mit einer gegenüber der vorherigen Nachlaufzeit verlängerten Laufzeit gestartet. Die Verlängerung dieser Nachlaufzeit kann um dasselbe Inkrement erfolgen, wie dieses ansonsten auch für Verlängerungen der Nachlaufzeit verwendet wird. Auch ist es möglich, bei einer durch Empfang eines präsenzbedingten Triggersignals in einem solchen, sich an eine Einschaltperiode anschließenden Kurzzeitfenster bedingten Nachlaufzeitverlängerung die Verlängerung mit einer größeren Zeitspanne vorzusehen, beispielsweise die Nachlaufzeit um zwei, drei oder mehr Inkremente zu verlängern.

Gemäß einer anderen Weiterbildung wird mit dem eine Ausschaltperiode beendenden Einschaltvorgang ein Timer für eine zweite Nachlaufzeit gestartet. Die zweite Nachlaufzeit beginnt mit einer Länge, die der initialen Nachlaufzeit der ersten Nachlaufzeit entspricht. Im Falle des Empfangs präsenzbedingter Triggersignale wird gemäß dieser Verfahrensausgestaltung die zweite Nachlaufzeit mit den zu der ersten Nachlaufzeit beschriebenen Schritten verlängert, die erste Nachlaufzeit jedoch nicht. Erst wenn die zweite Nachlaufzeit der ersten Nachlaufzeit entspricht, wird bei entsprechendem Detektieren präsenzbedingter Triggersignale anschließend wieder die erste Nachlaufzeit verlängert. Bei diesem Konzept wird das Abschalten des oder der Aktoren nach wie vor durch den Ablauf der ersten Nachlaufzeit gesteuert. Die mit dem erneuten Einschalten der Installation getriggerte zweite Nachlaufzeit bildet somit für die erste Nachlaufzeit ein Verzögerungsglied, damit sich diese nicht unmittelbar mit dem Beginn einer Einschaltperiode weiter verlängert. Verlängert wird diese nur dann, wenn auch in dieser Einschaltperiode die detektierte Präsenz entsprechend nachhaltig ist, was in der zweiten Nachlaufzeit und deren Änderung zum Ausdruck kommt. Insofern konvergieren hinsichtlich ihrer Laufzeit die beiden Nachlaufzeiten, wobei bei der vorbeschriebenen Ausgestaltung die erste Nachlaufzeit bis zum Konvergierungspunkt konstant bleibt, während nur die zweite Nachlaufzeit sukzessive verlängert wird. Möglich ist es auch, die erste Nachlaufzeit mit jedem Schritt, mit dem die zweite Nachlaufzeit verlängert wird, entsprechend zu verkürzen. Dasselbe wird erreicht, wenn das Inkrement zum Verlängern der zweiten Nachlaufzeit gegenüber dem Inkrement zum Verlängern der ersten Nachlaufzeit ein Mehrfaches des Inkrementes entspricht, etwa doppelt so groß ist. Aufgrund der bei einer solchen Verfahrensausgestaltung rascheren Konvergenz der beiden Nachlaufzeiten wird die erste Nachlaufzeit in kürzerer Zeit an die Nachhaltigkeit dieser neuen Einschaltperiode angepasst. Vorgesehen werden kann auch, in Abhängigkeit von der Differenz der ersten Nachlaufzeit und der zweiten Nachlaufzeit unterschiedlich zu verfahren. Ist die Differenz der beiden Nachlaufzeiten eher gering, dürfte es sich anbieten, die erste Nachlaufzeit konstant zu lassen und die zweite Nachlaufzeit bei entsprechendem Vorliegen präsenzbedingter Triggersignale sukzessive zu verlängern. Ist die Differenz der beiden Nachlaufzeiten eher größer, könnte eine andere Konvergenz, beispielsweise wie vorbeschrieben zur Anwendung gelangen, um eine raschere Konvergenz der beiden Nachlaufzeiten zu erreichen.

Wird eine Einschaltperiode vor einer Konvergenz der beiden Nachlaufzeiten beendet, kann vorgesehen sein, dass als erste Nachlaufzeit der folgenden Einschaltperiode nicht diejenige der gespeicherten ersten Nachlaufzeit als für diese Einschaltperiode initiale Nachlaufzeit verwendet wird, sondern eine gegenüber dieser verkürzte. Bei einer Ausgestaltung des erfindungsgemäßen Verfahrens, bei dem äquidistante Inkremente und Dekremente verwendet werden, bietet es sich für diesen Fall an, die initiale Nachlaufzeit der folgenden Einschaltperiode um ein Dekrement zu verringern. Vorgesehen sein kann auch, dass in Abhängigkeit von der Differenz der beiden Nachlaufzeiten zum Zeitpunkt des Beendens einer Einschaltperiode, und zwar wenn diese ein bestimmtes Maß überschreitet, die der nächsten Einschaltperiode zugrunde zu legende Nachlaufzeit auch um eine größere Zeitspanne, also um mehrere Dekremente, zu verringern. Durch diese Maßnahmen wird auf eine sodann offenbar geänderte, das heißt: im vorliegenden Fall reduzierte Nachhaltigkeit der Präsenz in der aktuellen Einschaltperiode verglichen mit der dieser wiederum vorangegangenen Einschaltperiode berücksichtigt.

Die Zeitspannen für eine Laufzeitänderung sind gemäß einer Ausgestaltung des erfindungsgemäßen Verfahrens äquidistant. Dieses müssen sie nicht notwendigerweise sein. Es ist durchaus möglich, unterschiedliche Zeitspannen für eine Laufzeitverlängerung und eine Laufzeitverkürzung vorzusehen.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: eine schematisierte Darstellung eines Raumes mit einer Präsenzüberwachungseinrichtung, vorgesehen zum Ansteuern von Aktoren,
- **Fig. 2:**: eine Darstellung entsprechend derjenigen der Figur 1 mit einer möglichen weiteren Ausgestaltung einer Präsenzüberwachungseinrichtung, vorgesehen zum Ansteuern von Aktoren,
- **Fig. 3:**: ein Zeitdiagramm zum Darstellen einer Szenerie zum Erläutern eines Verfahrens zum präsenzabhängigen Steuern der Nachlaufzeit eines elektrischen Aktors,
- **Fig. 4:**: ein Diagramm entsprechend demjenigen der Figur 3 mit einer weiteren möglichen Szenerie und
- **Fig. 5:**: ein weiteres Diagramm der vorgenannten Art mit noch einem weiteren möglichen Verfahrensmerkmal.

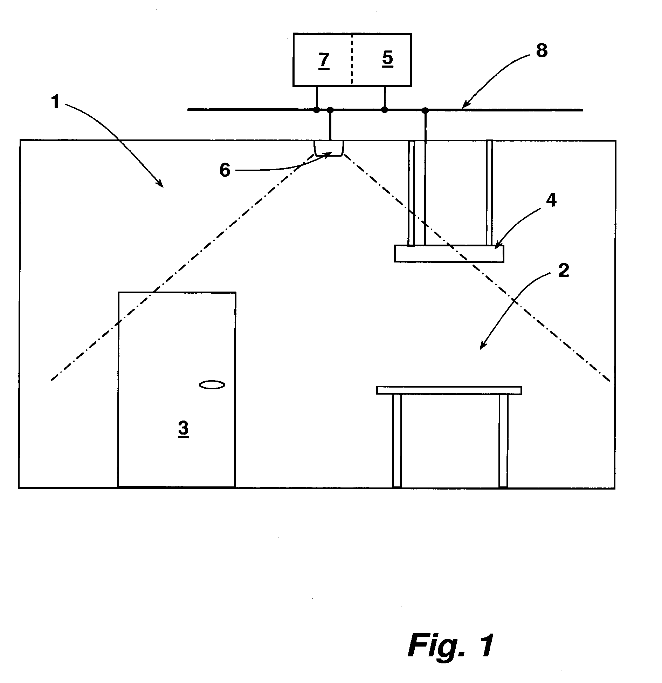

In einem in Figur 1 schematisiert dargestellten Raum 1 eines nicht näher dargestellten Gebäudes befindet sich ein Arbeitsplatz 2. Der Raum 1 ist durch eine Tür 3 zu betreten. Teil des Raumes 1 ist eine Beleuchtungsinstallation mit einer Leuchte 4 zum Beleuchten des Arbeitsplatzes 2. Die Leuchte 4 ist an eine Steuereinheit 5 angeschlossen, durch die die Aktorik der Leuchte 4 ein- und ausgeschaltet werden kann. Die Aktorik der Leuchte 4 ist bei dem dargestellten Ausführungsbeispiel innerhalb der Leuchte 4 angeordnet und aus diesem Grunde nicht nochmals gesondert in der Figur dargestellt. Über die Steuereinheit 5 kann die Leuchte 4 auch gedimmt werden. Der Installation ist ferner ein Präsenzmelder 6 zugehörig. Bei dem Präsenzmelder 6 handelt es sich um einen passiv IR-Sensor, der auf geeignete Art und Weise detektieren kann, ob sich eine Person in dem Raum 1 befindet oder nicht. Typischerweise wird man den Präsenzmelder 6 auslegen, damit dieser innerhalb des Raumes 1 bzw. innerhalb seines strichpunktiert eingefassten Überwachungsbereiches vorkommende Bewegungen erfassen kann. Somit ist es mit dem Präsenzmelder 6 möglich, das Eintreten einer Person in den Raum 1 ebenso zu detektieren, wie das Vorhandensein einer Person innerhalb des Raumes 1. Bei dem dargestellten Ausführungsbeispiel, bei dem der Präsenzmelder 6 als Bewegungsmelder ausgeführt ist, wird das Vorhandensein einer Person in dem Raum durch von dieser Person ausgeübte Bewegungen detektiert. Es versteht sich, dass es sich hierbei nicht notwendigerweise um größere Bewegungen, wie beispielsweise ein Hin- und Hergehen in dem Raum 1 handeln muss. Von dem Präsenzmelder 6 werden auch kleinere Bewegungen erfasst, beispielsweise solche Bewegungen, die typischerweise nur im Sitzen an dem Arbeitsplatz 2 ausgeführt werden. Der Präsenzmelder 6 ist an eine Auswerteeinheit 7 angeschlossen. Diese dient zum Auswerten der Ausgangssignale des Präsenzmelders 6 und zum Erzeugen von Triggersignalen, mit denen die Auswerteeinheit 7 die Steuereinheit 5 beaufschlagt. Bei dem dargestellten Ausführungsbeispiel sind die Auswerteeinheit 7 und die Steuereinheit 5 durch einen gemeinsamen Mikroprozessor ausgeführt. Es versteht sich, dass anstelle eines einzigen Mikroprozessors auch mehrere Mikroprozessoren verwendet werden können. Angeschlossen sind der Präsenzmelder 6 und die Leuchte 4 an die Auswerte- und Steuereinheit über einen Bus 8. Es versteht sich, dass an den Bus 8 neben der exemplarisch dargestellten Leuchte 4 weitere Leuchten angeschlossen sein können, beispielsweise um innerhalb des Raumes 1 eine Konstantlichtbeleuchtung steuern zu können. Bei einer solchen Ausgestaltung wären sodann in dem Raum 1 neben der Leuchte 4 weitere Leuchten installiert und an die Steuereinheit 5 angeschlossen.

Die Leuchte 4 als gebäudetechnischer elektrischer Aktor wird entweder manuell mittels einer Schalterbetätigung eingeschaltet oder dadurch, dass mittels des Präsenzmelders 6 festgestellt worden ist, dass eine Person den Raum 1 betritt. Die Schalterbetätigung ist allein für den Fall vorgesehen, dass der Präsenzmelder 6 beim Betreten einer Person in den Raum inaktiv geschaltet ist. Ansonsten erfolgt eine Beleuchtungssteuerung und damit eine Ansteuerung der Leuchte 4 in dem Raum 1 in Abhängigkeit von der festgestellten Präsenz innerhalb des Raumes 1.

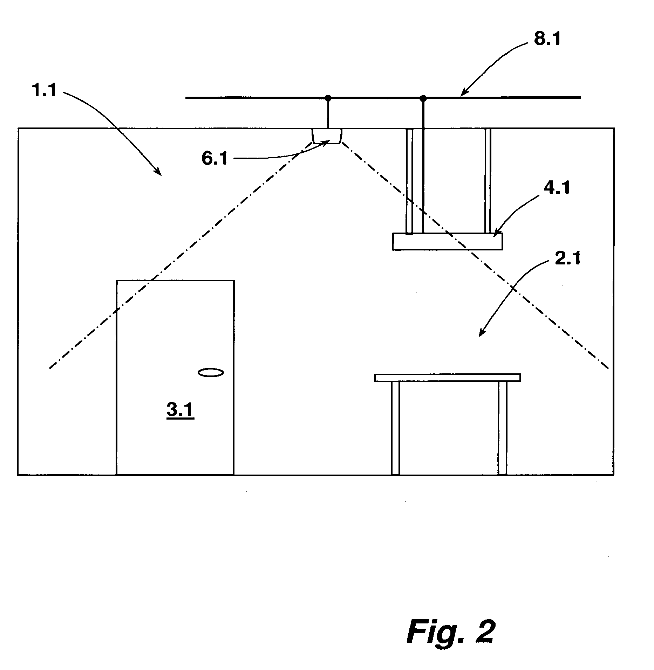

Figur 2 zeigt einen weiteren Raum 1.1, der prinzipiell dem Raum 1 der Figur 1 entspricht. Im Unterschied zu der Installation des Raumes 1 der Figur 1 sind in dem Raum 1.1 die Auswerteeinheit und die Steuereinheit Teil des Präsenzmelders 6.1. Somit handelt es sich bei dem Präsenzmelder 6.1 um ein Komplettelement mit den vorbeschriebenen Einzelmodulen. Die Funktionsweise des Präsenzmelders 6.1 entspricht derjenigen des Präsenzmelders 6. Somit gelten die diesbezüglichen Ausführungen gleichermaßen für den Präsenzmelder 6.1.

Bei dem Verfahren zum Ansteuern der Leuchte 4 als elektrischer Aktor eines Gebäudeinstallationssystems wird durch jedes von der Auswerteeinheit 7 an die Steuereinheit 5 übergebene Triggersignal ein Einschaltvorgang der Leuchte 4 bzw. der die Leuchte 4 ansteuernden Aktorik vorgenommen, sollte die Leuchte 4 noch nicht eingeschaltet gewesen sein. Jeder Einschaltvorgang wird für eine bestimmte Zeit aufrechterhalten. Diese Zeit wird als Nachlaufzeit angesprochen. Die Nachlaufzeit stellt somit diejenige Verzögerung bis zum Absetzen eines von der Steuereinheit 5 an die Aktorik der Leuchte 4 gesendeten Ausschalttelegramms dar. Da mit dem Eingang eines jeden präsenzbedingten Triggersignales die Nachlaufzeit neu gestartet wird, ist dieses als Reset für den die Nachlaufzeit überwachenden Timer angesprochen. Tatsächlich wird das Ausschalttelegramm von der Steuereinheit 5 erst abgesetzt, wenn innerhalb der aktuell laufenden Nachlaufzeit kein präsenzbedingtes Triggersignal empfangen worden ist.

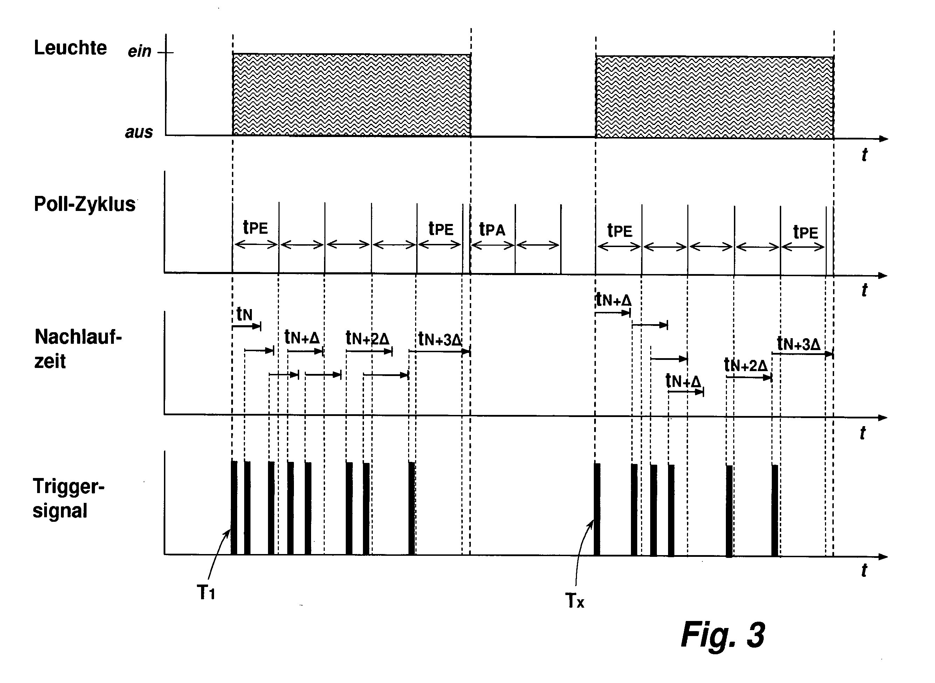

Um bei einem solchen Verfahren, wie vorbeschrieben vor allem den Komfortaspekt und den Energieeffizienzaspekt zu verbessern, wird die aktuelle Nachlaufzeit in Abhängigkeit von der Nachhaltigkeit der Präsenz innerhalb eines bestimmten Überwachungszeitraumes - einem Zeitfenster - überwacht. Ist von einer nachhaltigen Präsenz auszugehen, wird eine der nachfolgend gestarteten Nachlaufzeiten um ein bestimmtes Inkrement verlängert. In den Figuren ist das Inkrement mit Δ bezeichnet. Dargestellt ist dieses Verfahren in den Diagrammen der Figur 3.

Figur 3 zeigt in übereinander liegenden Diagrammen ein beispielhaftes Szenario. In der obersten Zeile ist der Zustand der Aktorik - der Leuchte 4 - dargestellt, und zwar in Bezug auf die Zustände "aus" und "ein". In der untersten Zeile sind von der Auswerteeinheit 7 infolge der Präsenzüberwachung des Raumes 1 präsenzbedingt generierte Triggersignale als vertikale Impuls-Balken aufgetragen. In der Zeile oberhalb der die Bewegungserfassung wiedergebenden Triggersignale sind die mit jedem Triggersignal ausgelösten Nachlaufzeiten aufgetragen. In der wiederum darüber liegenden Zeile des Diagramms sind die Überwachungszeiträume t**_{PE}** bzw. t**_{PA}** aufgetragen. Dabei handelt es sich bei den Überwachungszeiträumen t**_{PE}** um äquidistante Überwachungszeiträume während der Zeitspanne, in der die Leuchte 4 eingeschaltet ist. Bei den Überwachungszeiträumen t**_{PA}** handelt es sich um solche, die zur Anwendung kommen, wenn die Leuchte 4 ausgeschaltet ist. Dieses Diagramm ist daher mit "Poll-Zyklus" bezeichnet.

Mit der Einrichtung zum präsenzabhängigen Steuern der Nachlaufzeit kann die durch ein präsenzbedingtes Triggersignal in Gang gesetzte Nachlaufzeit zwischen einem systemseitig festgelegten Minimalwert t**_{Nmin}** und einem ebenfalls systemseitig festgelegten Maximalwert t**_{Nmax}** eingerichtet werden. Diese Nachlaufzeit wird nachfolgend auch als initiale Nachlaufzeit t**_{N}** angesprochen. Gemäß einer beispielhaften Ausgestaltung beträgt die systemseitig minimal einstellbare Nachlaufzeit t**_{Nmin}** 5 Minuten, die maximale Nachlaufzeit t**_{Nmax}** 15 Minuten. Es versteht sich, dass man die initiale Nachlaufzeit t**_{N}** eher im Bereich des systemseitigen Nachlaufzeitminimums t**_{Nmin}** parametrieren wird, da diese regelmäßig deutlich kürzer zu bemessen ist als die systemseitige maximale Nachlaufzeit t**_{Nmax}.**

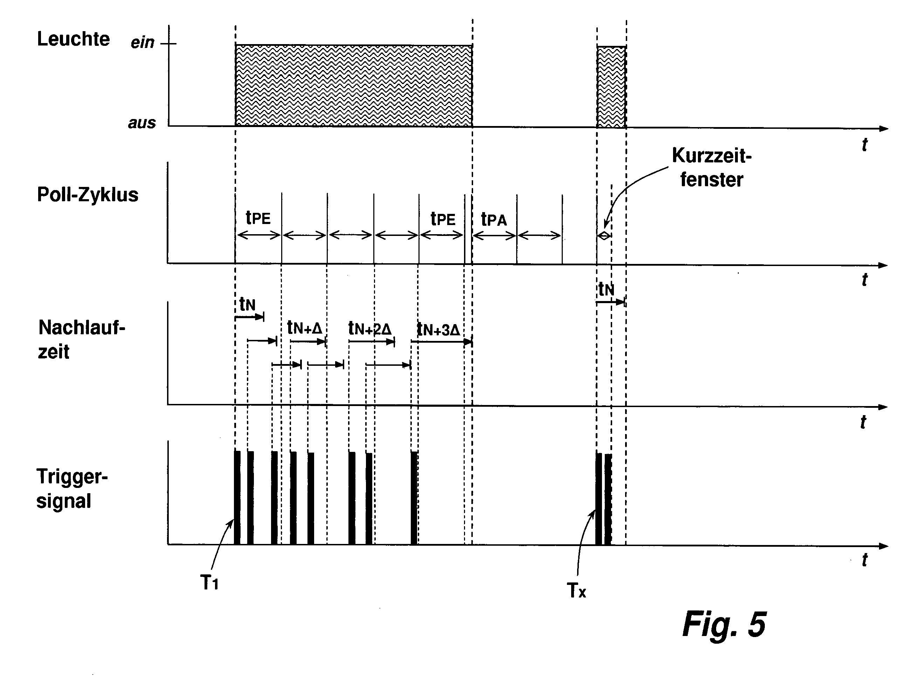

Ausgehend von einem initialisierten System bewirkt eine Präsenzerkennung bei nicht aktivierter Kurzzeitpräsenzerfassung, welche nachstehend zu Figur 5 beschrieben wird, dass ein erstes Triggersignal T**₁** generiert wird, was zum Einschalten der Leuchte 4 führt. Dies erfolgt durch Absetzen eines Einschalttelegrammes von der Steuereinheit 5, welches von der Aktorik der Leuchte 4 empfangen und entsprechend umgesetzt wird. Mit dem Einschaltvorgang wird ein die Nachlaufzeit überwachender Timer gestartet, und zwar zum Überwachen der initialen Nachlaufzeit t**_{N}**. Wird innerhalb der Nachlaufzeit t**_{N}** kein weiteres präsenzbedingtes Triggersignal empfangen, wird nach Ablauf dieser Nachlaufzeit die Leuchte 4 ausgeschaltet. In der in Figur 3 gezeigten Szenerie ist dieses jedoch nicht der Fall. Innerhalb der ersten laufenden Nachlaufzeiten t**_{N}** werden weitere Triggersignale empfangen, denen zufolge der Nachlaufzeittimer jedes Mal zurückgesetzt wird, mithin ein Nachlaufzeittimerretrigger durchgeführt wird.

Zeitgleich mit dem Einschalten der Leuchte 4 wird ein Poll-Zyklus gestartet. In Figur 3 ist die Zeitachse des Poll-Zykluses anders als bei den übrigen Diagrammen. Tatsächlich beträgt die Poll Zeit t**_{PE}** bei dem dargestellten Ausführungsbeispiel zwischen 30 und 60 Sekunden. Innerhalb eines Zeitfensters t**_{PE}** des Poll-Zyklus wird die Nachhaltigkeit der Präsenz innerhalb des Überwachungsbereiches des Präsenzmelders 6 überwacht. Dieses erfolgt durch Zählen der präsenzbedingten Triggersignale innerhalb eines Zeitfensters t**_{PE}.** Wenn die gezählte Anzahl eine gewisse Zahl überschreitet, wird die durch ein Triggersignal in Gang gesetzte Nachlaufzeit verlängert. Bei dem dargestellten Ausführungsbeispiel ist vorgesehen, dass, wenn innerhalb eines Zeitfensters t**_{PE}** ein Triggersignal empfangen wird, die Nachlaufzeit verlängert wird. Bei dem dargestellten Ausführungsbeispiel wird die Verlängerung der Nachlaufzeit beginnend mit der durch das erste Triggersignal getriggerten Nachlaufzeit durchgeführt, welches innerhalb des auf das erste Zeitfenster t**_{PE}** folgenden Poll-Zeitfensters t**_{PE}** empfangen wird. Erhöht wird die Nachlaufzeit um ein vorbestimmtes zeitliches Inkrement. Dieses beträgt bei dem dargestellten Ausführungsbeispiel 5 Sekunden. In Figur 3 ist dieses nicht maßstäblich durch die größere Länge der in der Zeile oberhalb der Bewegungserfassung wiedergegebenen Nachlaufzeiten erkennbar. Die nachfolgend empfangenen Triggersignale führen regelmäßig zu einem Nachlaufzeittimerretrigger, wobei die damit getriggerte Nachlaufzeit dieser verlängerten Nachlaufzeit entspricht.

Die Überwachung durch den Poll-Zyklus setzt sich fort, was aufgrund der festgestellten Nachhaltigkeit der Präsenz dazu führt, dass in dem dritten Poll-Zeitfenster die Nachlaufzeit bereits um zwei Inkremente und in dem vierten Zeitfenster bereits um drei Inkremente und somit um 15 sec verlängert worden ist. In der letzen, auf der Szenerie der Figur 3 in der ersten Einschaltperiode wiedergegebenen Nachlaufzeit sind keine Triggersignale empfangen worden, weshalb nach Ablauf dieser Nachlaufzeit die Leuchte 4 ausgeschaltet wird.

Die letzte Nachlaufzeit der ersten Einschaltperiode bzw. deren Länge wird systemseitig gespeichert und grundsätzlich der nächsten Einschaltperiode als erste Nachlaufzeit zugrunde gelegt.

Bei dem dargestellten Ausführungsbeispiel wird auch die Ausschaltphase in Zeitfenstern überwacht. Bei dem dargestellten Ausführungsbeispiel sind die Zeitfenster t**_{PE}** und t**_{PA}** äquidistant. Die Überwachung der Ausschaltperioden in Zeitfenstern dient dem Zweck, in Abhängigkeit von der Nachhaltigkeit einer Nicht-Präsenz die zuvor durch eine nachhaltige Präsenz aufgebaute Nachlaufzeit sukzessive wieder zu reduzieren. Dies erfolgt dadurch, dass, wenn innerhalb eines Ausschaltzeitfensters t**_{PA}** kein präsenzbedingtes Triggersignal empfangen wird, was wiederum zum Einschalten der Leuchte 4 führen würde, die für den Beginn der nächsten Einschaltperiode zugrunde zu legende, gespeicherte Nachlaufzeit um ein Dekrement reduziert wird. Die Reduzierung erfolgt bei diesem Beispiel ebenfalls mit einem Dekrement von jeweils 5 Sekunden. Je länger die Ausschaltperiode anhält, umso mehr wird die gespeicherte, dem nächsten Einschaltvorgang zugrunde zu legende Nachlaufzeit verkürzt. Die untere Grenze einer solchen Nachlaufzeitverkürzung innerhalb einer Ausschaltperiode ist die initiale Nachlaufzeit t**_{N}.** Bei dem dargestellten Ausführungsbeispiel beträgt die Länge der Nachlaufzeit am Ende des zweiten Zeitfensters t**_{PA}**: initiale Nachlaufzeit t**_{N}** + (3 Δ - 2 Δ).

In dem dritten Zeitfenster t**_{PA}** wird wiederum ein präsenzbedingtes Triggersignal empfangen, womit die Leuchte 4 erneut eingeschaltet wird. Nach wie vor wird das Verfahren im Modus: nicht aktivierte Kurzzeitpräsenzüberwachung beschrieben. Zeitgleich wird im Poll-Zyklus wieder auf eine Einschaltperiodenüberwachung umgeschaltet. Mit diesem Einschaltvorgang wird neben dem ersten Nachlaufzeittimer, wie dieses vorbeschrieben ist, ein zweiter Nachlauftimer gestartet. Dieser startet mit der minimalen initialen Nachlaufzeit t**_{N}.** In Abhängigkeit von der Nachhaltigkeit der Präsenz und den diesbezüglich empfangenen Triggersignalen wird zunächst nur die zweite Nachlaufzeit in der zu der ersten Einschaltperiode beschriebenen Art und Weise sukzessive verlängert, vorausgesetzt, dass die Präsenz entsprechend nachhaltig ist und entsprechende Triggersignale empfangen werden. Diese Triggersignale haben zunächst keinen Einfluss auf eine Verlängerung der ersten Nachlaufzeit. Erst wenn beide Nachlaufzeiten gleich sind, wird im Falle des Feststellens einer nachhaltigen Präsenz fortan die erste Nachlaufzeit in der vorbeschriebenen Art und Weise verlängert. Die zweite Nachlaufzeit wird anschließend nicht mehr benötigt. Auf diese Weise wird der Beginn einer auf eine erste Einschaltperiode folgenden zweiten Einschaltperiode hinsichtlich eines wirksamen Verlängerns der Nachlaufzeit bei einer nachhaltigen Präsenz verzögert und damit an die Nachhaltigkeit der aktuellen Präsenz angepasst. Vermieden wird hierdurch ein unter Umständen zu schnelles Anwachsen der Nachlaufzeit.

Wird bei dem dargestellten Ausführungsbeispiel eine solche Einschaltperiode beendet, bevor die zweite Nachlaufzeit bis zur Länge der ersten Nachlaufzeit angewachsen ist, wird die in dem Speicher hinterlegte Nachlaufzeit, die den Ausgangspunkt für die der folgenden Einschaltperiode zugrunde zu legende Nachlaufzeit ist, um ein Dekrement reduziert. In Abhängigkeit von der Länge der sich an eine solche Einschaltperiode anschließenden Ausschaltperiode wird, wie dieses vorbeschrieben ist, diese Nachlaufzeit um weitere Dekremente reduziert.

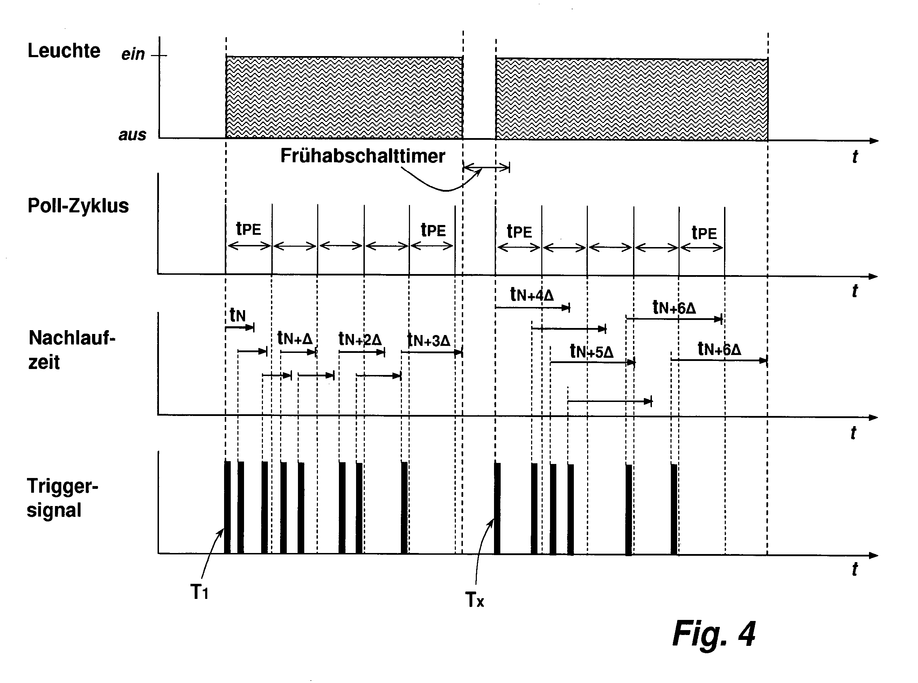

Neben dem vorbeschriebenen Umschalten im Poll-Zyklus auf die Zeitfenster t**_{PA} -** dem Beginn einer Ausschaltperiode mit der Beendigung einer ersten Einschaltperiode - wird zudem ein Frühabschalttimer gestartet. Die Laufzeit dieses Timers beträgt typischerweise wenige Sekunden, beispielsweise 10 Sekunden. Wird innerhalb der Dauer des Frühabschalttimers ein Triggersignal empfangen, wird die Leuchte 4, wie üblich, eingeschaltet, jedoch wird diesem Triggersignal nicht die in dem Speicher abgelegte, letzte Nachlaufzeit der zuvor beendeten Einschaltperiode zum Ansatz gebracht, sondern eine verlängerte. Bei dem dargestellten Ausführungsbeispiel wird die gespeicherte Nachlaufzeit verlängert zum Ansatz gebracht, und zwar um ein Inkrement. Damit beginnt diese weitere Einschaltperiode mit einer gegenüber der gespeicherten Nachlaufzeit verlängerten Nachlaufzeit. Dieses Szenario ist in den Diagrammen der Figur 4 gezeigt. Anschließend entwickelt sich die Nachlaufzeit in Abhängigkeit von der Nachhaltigkeit der Präsenz in dem Raum 1 weiter, so wie dieses bereits vorbeschrieben ist.

Der zu Figur 3 beschriebene Einschaltvorgang der Leuchte 4, der den Beginn der zweiten Einschaltperiode definiert, wird gemäß einer Weiterbildung in einem ersten Zeitabschnitt daraufhin überwacht, ob es sich bei der Präsenz, die zu dem Beginn der zweiten Einschaltperiode geführt hat, möglicherweise nur um eine Kurzzeit-Präsenz handelt. Gezeigt ist dieses in der Szenerie der Figur 5. Durchgeführt wird diese Überwachung naturgemäß nur dann, wenn nicht zuvor eine Frühabschaltung detektiert worden ist, wie dieses zu Figur 4 beschrieben ist. Zu diesem Zweck wird innerhalb des ersten Zeitfensters t**_{PE}** der zweiten Einschaltperiode ein Kurzzeitfenster definiert. Dieses Zeitfenster ist wesentlich kürzer als die initiale Nachlaufzeit t**_{N}** und beträgt bei dem dargestellten Ausführungsbeispiel etwa 20 Sekunden. Werden präsenzbedingte Triggersignale in diesem ersten für eine Kurzpräsenzerkennung vorgesehenen Zeitintervall empfangen, wird unabhängig von der grundsätzlich dem dem ersten Triggersignal dieser Einschaltperiode zugrunde zu legenden Nachlaufzeit die initiale Nachlaufzeit t**_{N}** zugrunde gelegt. Läuft diese ab, ohne dass ein weiteres Triggersignal empfangen wird, wird die Leuchte 4 ausgeschaltet (siehe Figur 5). Wenn jedoch innerhalb der noch laufenden Nachlaufzeit t**_{N}** ein weiteres Triggersignal empfangen wird, wird der Kurzzeitpräsenzalgorithmus abgebrochen und das Verfahren auf Normalmodus, wie zu Figuren 3 und 4 beschrieben, umgeschaltet.

Der vorbeschriebene Modus "Kurzzeitpräsenzüberwachung" wird durchgeführt, wenn diese Option systemseitig eingestellt ist. Dieses dürfte die Regel sein. Daher wird die Kurzzeitpräsenzüberwachung zu Beginn einer jeden Einschaltperiode durchgeführt, wenn keine Frühabschaltung erkannt worden ist.

Das beanspruchte Verfahren ist anhand von Ausführungsbeispielen beschrieben worden. In dem Ausführungsbeispiel ist der Bewegungssensor als passiver IR-Sensor beschrieben worden. Anstelle des Einsatzes eines solchen Bewegungssensors können auch solche eingesetzt werden, die mit anderen Technologien arbeiten, beispielsweise mit Radar oder Ultraschall oder die als Kameras ausgeführt sind. Für einen Fachmann ergeben sich ohne weiteres weitere Möglichkeiten das Beanspruchte Verfahren umzusetzen, wobei diese Ausgestaltungen ebenfalls zum Offenbarungsgehalt dieser Unterlagen zu zählen sind, jedoch ohne dass diese explizit ausgeführt werden müssten.

### Bezugszeichenliste

- 1, 1.1: Raum
- 2, 2.1: Arbeitsplatz
- 3, 3.1: Tür
- 4, 4.1: Leuchte
- 5: Steuereinheit
- 6, 6.1: Präsenzmelder
- 7: Auswerteeinheit
- 8, 8.1: Bus
- t**_{N}**: initiale Nachlaufzeit
- t**_{Nmin}**: minimale Nachlaüfzeit
- t**_{Nmax}**: maximale Nachlaufzeit
- T₁, Tₓ: Triggersignal

## Patentansprüche

1. Verfahren zum präsenzabhängigen Steuern der Nachlaufzeit eines oder mehrerer elektrischer Aktoren, etwa des oder der Aktoren einer Beleuchtungsinstallation in einem Raum (1,1.1), bei welchem Verfahren
- mit dem Einschalten des oder der Aktoren ein Timer für die Nachlaufzeit gestartet wird, wobei die initiale Nachlaufzeit (t**_{N}**) kürzer als eine systemseitig vorgegebene oder einstellbare maximale Nachlaufzeit (t**_{Nmax}**) ist,
- durch jedes präsenzbedingtes Triggersignal innerhalb einer laufenden Nachlaufzeit ein Nachlaufzeittimerretrigger durchgeführt wird und
- der oder die Aktoren ausgeschaltet werden, wenn die aktuell laufende Nachlaufzeit abgelaufen ist und innerhalb dieser kein präsenzbedingtes Triggersignal empfangen worden ist,
**dadurch gekennzeichnet, dass**
- beginnend mit dem Einschalten des oder der Aktoren in aufeinanderfolgenden Zeitfenstern die in diesen festgestellten präsenzbedingten Triggersignale gezählt werden und
- wenn die Anzahl der Triggersignale eine vorgegebene Anzahl überschreitet, die aktuelle Nachlaufzeit beginnend mit dem nächsten oder einem der nächsten Nachlaufzeittimerretriggers verlängert wird, wobei eine Verlängerung der Nachlaufzeit nur bis zu der Maximallänge der Nachlaufzeit möglich ist.

2. Verfahren nach Anspruch 1, **dadurch gekennzeichnet, dass** die Nachlaufzeit beginnend mit dem dem aktuellen Zeitfenster folgenden Nachlaufzeittimerretrigger oder mit dem ersten Nachlaufzeittimerretrigger des nächsten Zeitfensters verlängert wird.

3. Verfahren nach Anspruch 1 oder 2, **dadurch gekennzeichnet, dass** die Nachlaufzeit verlängert wird, wenn innerhalb des aktuellen Zeitfensters die Anzahl der gezählten Triggersignale größer als null ist.

4. Verfahren nach einem der Ansprüche 1 bis 3, **dadurch gekennzeichnet, dass** das Einschalten des oder der Aktoren durch ein durch einen Präsenz- oder Bewegungsmelder generiertes Triggersignal erfolgt.

5. Verfahren nach einem der Ansprüche 1 bis 4, **dadurch gekennzeichnet, dass** die letzte Nachlaufzeit der vorangegangenen Einschaltperiode gespeichert und als aktuelle Nachlaufzeit für den Beginn der nächsten Einschaltperiode zugrunde gelegt wird.

6. Verfahren nach Anspruch 5, **dadurch gekennzeichnet, dass** nach dem Ausschalten des oder der Aktoren bei Ausbleiben von präsenzbedingten Triggersignalen in sich an die vorangegangene Einschaltperiode anschließenden Zeitfenstern die gespeicherte, aktuelle Nachlaufzeit jeweils verkürzt wird, welche ein- oder mehrfach verkürzte Nachlaufzeit sodann als aktuelle Nachlaufzeit der nächsten Einschaltperiode zugrunde gelegt wird.

7. Verfahren nach Anspruch 5, **dadurch gekennzeichnet, dass** die sich an einen Ausschaltvorgang anschließende, durch ein präsenzbedingtes Triggersignal ausgelöste Einschaltperiode mit einer gegenüber der zuvor gespeicherten und der nächsten Einschaltperiode zugrunde zu legenden Nachlaufzeit verlängerten Nachlaufzeit gestartet wird, wenn das Triggersignal innerhalb eines sich an den vorangegangenen Ausschaltvorgang anschließenden Kurzzeitfensters empfangen wird.

8. Verfahren nach einem der Ansprüche 5 bis 7, **dadurch gekennzeichnet, dass** mit dem auf einen ersten Ausschaltvorgang folgenden Einschaltschaltvorgang ein Timer für eine zweite Nachlaufzeit gestartet wird, wobei die zweite Nachlaufzeit derjenigen der initialen ersten Nachlaufzeit entspricht, und im Folgenden die Schritte des Kennzeichens des Anspruchs 1 nur auf die zweite Nachlaufzeit angewandt werden, solange bis die Dauer der zweiten Nachlaufzeit der ersten Nachlaufzeit entspricht, und dass bei Eintreffen weiterer präsenzbedingter Triggersignale nach erfolgter Konvergenz von erster und zweiter Nachlaufzeit die erste Nachlaufzeit mit den beschriebenen Schritten verlängert wird.

9. Verfahren nach Anspruch 8, **dadurch gekennzeichnet, dass** im Zusammenhang mit der Beendigung einer Einschaltperiode die Differenz oder das Verhältnis zwischen erster Nachlaufzeit und zweiter Nachlaufzeit betrachtet wird und für den Fall, dass die Differenz größer 0 bzw. das Verhältnis größer 1 ist, die aktuelle erste Nachlaufzeit verkürzt wird.

10. Verfahren nach einem der Ansprüche 1 bis 9, **dadurch gekennzeichnet, dass** die für eine Nachlaufzeitänderung vorgesehenen Zeitspannen äquidistant sind.

11. Einrichtung zum Durchführen des Verfahrens nach einem der Ansprüche 1 bis 10, **dadurch gekennzeichnet, dass** die Einrichtung umfasst:
- einen Präsenzmelder (6), ausgerichtet zum Überwachen eines vorgesehenen Überwachungsbereiches in Bezug auf darin vorkommende Bewegungen,
- eine Auswerteeinheit (7) zum Auswerten der Ausgangssignale des Präsenzmelders (6) in Bezug auf präsenzbedingte Bewegungen und zum Erzeugen von Triggersignalen und
- eine von den Triggersignalen angesteuerte Steuereinheit (5) zum Ansteuern eines oder mehrerer elektrischer Aktoren und zum Auswerten der präsenzbedingten Triggersignale zum Zwecke einer Steuerung der Nachlaufzeit.

12. Einrichtung nach Anspruch 11, **dadurch gekennzeichnet, dass** zum Wahrnehmen der Funktionen der Auswerteeinheit und der Steuereinheit ein gemeinsamer Mikroprozessor vorgesehen ist.

13. Einrichtung nach Anspruch 10 oder 11, **dadurch gekennzeichnet, dass** der Präsenzmelder (6.1) ein gemeinsames Modul mit der Auswerteeinheit und der Steuereinheit bildet.

## Claims

1. Process for presence-depending control of the after-run time of one or several electric actuators, e.g. of one or several actuators of a lighting installation in a room (1,1.1), in which process
- with switching on of the actuator/actuators a timer for the after-run time is started, in which the initial after-run time (t_{N}) is shorter than a maximum after-run time pre-set or adjustable by the system (t_{Nmax}),
- by each presence-depending trigger signal within a running after-run time an after-run timer retrigger is effected and
- the actuator/actuators is/are switched off if the currently running after-run time is up and if within this time no presence-depending trigger signal has been received,
**characterized by** the fact that
- starting with switch-on of the actuator/actuators in successive time frames, the presence-depending trigger signals noted in these time frames are counted and
- if the number of trigger signals exceeds a pre-set number, the current after-run time is prolonged starting with the next or one of the next after-run timer retriggers, in which the after-run time can only be prolonged up to the maximum length of the after-run time.

2. Process in accordance with Claim 1, **characterized by** the fact that the after-run time is prolonged starting with the after-run timer retrigger following the current time frame or with the first after-run timer retrigger of the next time frame.

3. Process in accordance with Claim 1 or Claim 2, **characterized by** the fact that the after-run time is prolonged if within the current time frame the number of counted trigger signals is greater than zero.

4. Process in accordance with any of Claims 1 to 3, **characterized by** the fact that the switch-on of the actuator/actuators is effected by a trigger signal generated by a presence or movement detector.

5. Process in accordance with any of Claims 1 to 4, **characterized by** the fact that the last after-run time of the previous switch-on period is memorized and stored as current after-run time for the start of the next switch-on period.

6. Process in accordance with Claim 5, **characterized by** the fact that after switch-off of the actuator/actuators in absence of presence-depending trigger signals in time frames following the preceding switch-on period the stored current after-run time is shortened respectively, this one time or several times shortened after-run time is then stored as current after-run time of the next switch-on period.

7. Process in accordance with Claim 5, **characterized by** the fact that the switch-on period following a switch-off process and triggered by a presence-depending trigger signal is started with an after-run time prolonged compared to the previously stored after-run time and to the after-run time based on the next switch-on period, if the trigger signal is received within a short-time frame following the preceding switch-off process.

8. Process in accordance with any of Claims 5 to 7, **characterized by** the fact that with a switch-on process following a first switch-off process a timer for a second after-run time is started, in which the second after-run time corresponds to that of the initial first after-run time, and in the following the steps of the characteristic in Claim 1 are only applied to the second after-run time, as long as the length of the second after-run time corresponds to the length of the first after-run time, and that on receiving of further presence-depending trigger signals after effected convergence of first and second after-run time the first after-run time is prolonged with the steps described.

9. Process in accordance with Claim 8, **characterized by** the fact that the difference or relation between first and second after-run time is regarded in connection with stopping of a switch-on period and in case that the difference is greater than 0 or the relation is greater than 1, the current first after-run time is shortened.

10. Process in accordance with any of Claims 1 to 9, **characterized by** the fact that the periods of time intended for a modification of the after-run time are equidistant.

11. System to operate a process in accordance with any of Claims 1 to 10, **characterized by** the fact that the system comprises:
- a presence detector (6), designed to monitor a definite monitored area with regard to movements in this area,
- an evaluation unit (7) for evaluation of the output signals of the presence detector (6) with regard to presence-related movements and for generation of trigger signals and
- a control unit (5) actuated by the trigger signals to control one or several electric actuators and for evaluation of the presence-related trigger signals to control the after-run time.

12. System in accordance with Claim 11, **characterized by** the fact that to use the functions of the evaluation unit and the control unit, a common microprocessor is provided.

13. System in accordance with Claim 10 or Claim 11, **characterized by** the fact that the presence detector (6.1) forms a common module with the evaluation unit and the control unit.

## Revendications

1. Procédé pour la commande dépendante de la présence du temps de poursuite d'un ou plusieurs actionneurs électriques, par exemple de l'actionneur ou des actionneurs d'une installation d'éclairage dans une salle (1, 1.1), dans ce procédé
- une minuterie pour le temps de poursuite est démarrée à la mise en circuit de l'actionneur ou des actionneurs, le temps de poursuite initial (t_{N}) étant plus court qu'un temps de poursuite maximum (t_{Nmax}) prescrit par le système ou ajustable,
- un re-déclenchement de minuterie de temps de poursuite est réalisé par un signal de déclenchement conditionné par la présence dans un temps de poursuite en cours et
- l'actionneur ou les actionneurs sont mis hors circuit lorsque le temps de poursuite actuel est écoulé et qu'aucun signal de déclenchement conditionné par la présence n'a été reçu pendant ce temps,
**caractérisé en ce que**
- les signaux de déclenchement conditionnés par la présence constatés dans des fenêtres de temps successives sont comptés, en commençant par la mise en circuit de l'actionneur ou des actionneurs et
- lorsque le nombre de signaux de déclenchement a dépassé un nombre prescrit, le temps de poursuite actuel est prolongé, commençant par le prochain ou l'un des prochains re-déclenchements de minuterie de temps de poursuite, ce faisant une prolongation du temps de poursuite n'est possible que jusqu'à la durée maximale du temps de poursuite.

2. Procédé selon la revendication 1, **caractérisé en ce que** le temps de poursuite, commençant par le re-déclenchement de minuterie de temps de poursuite suivant la fenêtre de temps actuelle ou par le premier re-déclenchement de minuterie de temps de poursuite de la fenêtre de temps suivante, est prolongé.

3. Procédé selon la revendication 1 ou 2, **caractérisé en ce que** le temps de poursuite est prolongé lorsque le nombre de signaux de déclenchement comptés dans la fenêtre de temps actuelle est supérieur à zéro.

4. Procédé selon l'une des revendications 1 à 3, **caractérisé en ce que** la mise en circuit de l'actionneur ou des actionneurs est effectuée par un signal d'enclenchement généré par un détecteur de présence ou un détecteur de mouvement.

5. Procédé selon l'une des revendications 1 à 4, **caractérisé en ce que** le dernier temps de poursuite de la précédente période de mise en circuit est enregistré et constitue la base du temps de poursuite actuel pour le début de la période de mise en circuit suivante.

6. Procédé selon la revendication 5, **caractérisé en ce que**, après la mise hors circuit de l'actionneur ou des actionneurs en l'absence de signaux de déclenchement conditionnés par la présence dans les fenêtres de temps suivant directement la période de mise en circuit précédente, le temps de poursuite enregistré actuel est prolongé respectivement, un temps de poursuite raccourci, simple ou multiple, constituant ensuite la base du temps de poursuite actuel de la période de mise en circuit suivante.

7. Procédé selon la revendication 5, **caractérisé en ce que** la période de déclenchement suivant une opération de mise hors circuit, déclenchée par un signal d'enclenchement conditionné par la présence, est démarrée avec un temps de poursuite prolongé par rapport au temps de poursuite précédemment enregistré et sur lequel doit se baser la prochaine période de mise en circuit, lorsque le signal d'enclenchement est reçu pendant une fenêtre de temps courte suivant directement une opération de mise hors circuit précédente.

8. Procédé selon l'une des revendications 5 à 7, **caractérisé en ce que**, avec l'opération de mise en circuit suivant la première opération de mise hors circuit, une minuterie pour un deuxième temps de poursuite est démarrée, ce faisant le deuxième temps de poursuite correspond au premier temps de poursuite initial et, par la suite, les étapes de la caractéristique de la revendication 1 ne sont appliquées qu'au deuxième temps de poursuite tant que la durée du deuxième temps de poursuite correspond au premier temps de poursuite et qu'à l'arrivée d'autres signaux d'enclenchement conditionnés par la présence, une fois que le premier et le deuxième temps de poursuite ont convergé, le premier temps de poursuite est prolongé des étapes décrites.

9. Procédé selon la revendication 8 **caractérisé en ce qu'**en relation avec la fin d'une période de mise en circuit, la différence ou le rapport entre le premier temps de poursuite et le deuxième temps de poursuite soient pris en considération et, au cas où la différence est supérieure à 0 ou au cas où le rapport est supérieur à 1, le premier temps de poursuite actuel est raccourci.

10. Procédé selon l'une des revendications 1 à 9, **caractérisé en ce que** les espaces de temps prévus pour une modification de temps de poursuite sont équidistants.

11. Dispositif pour réaliser le procédé selon l'une des revendications 1 à 10, **caractérisé en ce que** le dispositif comprend :
- un détecteur de présence (6) orienté pour la surveillance d'une zone de surveillance prévue concernant les mouvements qui s'y présentent,
- une unité d'évaluation (7) pour évaluer les signaux de sortie du détecteur de présence (6) concernant les mouvements conditionnés par la présence et pour la génération de signaux d'enclenchement et
- une unité de commande (5) pilotée par les signaux d'enclenchement pour le pilotage d'un actionneur ou de plusieurs actionneurs électriques et pour évaluer des signaux d'enclenchement conditionnés par la présence pour les besoins d'une commande du temps de poursuite.

12. Dispositif selon la revendication 11 **caractérisé en ce qu'**un microprocesseur commun est prévu pour assurer les fonctions de l'unité d'évaluation et de l'unité de commande.

13. Dispositif selon la revendication 10 ou 11 **caractérisé en ce que** le détecteur de présence (6.1) forme un module commun avec l'unité d'évaluation et l'unité de commande.
